# EUROPEAN PATENT APPLICATION

(11) **EP 4 767 806 A1**
(43) Date of publication of application: **01.07.2026**
(21) Application number: 25219235.6
(22) Date of filing: 27.11.2025
(51) Int. Cl.: A01D 34/63, A01D 34/74

(54) **MOWER UNIT**

(30) Priority: 25.12.2024 JP 2024229047
(71) Applicant: Kubota Corporation, Osaka-shi, Osaka 530-0011 (JP)
(72) Inventor: KOYAMA, Yoichiro, Sakai-shi, Osaka, 5900908 (JP); TAMAKI, Satoru, Sakai-shi, Osaka, 5900908 (JP); NAKATSU, Ryotaro, Sakai-shi, Osaka, 5900908 (JP); TOGOSHI, Yoshikazu, Sakai-shi, Osaka, 5900908 (JP)
(74) Representative: Cabinet Beau de Loménie

(57) **Abstract**

A mower unit (1) includes: a mower deck (2); and a wheel unit (4), the wheel unit (4) including: a wheel body (40); and a wheel holding mechanism (5) configured to move the wheel body (40) heightwise relative to the mower deck (2) and hold the wheel body (40), the wheel holding mechanism (5) including: a holding rod (7) coupled to the wheel body (40); a boss bracket (50) including a boss section (51) through which the holding rod (7) extends in such a manner as to be movable heightwise; an operation rod (6) having an axis, slidable along the axis, and including: a locking section (62) configured to lock the holding rod (7) at any of a plurality of positions; and an unlocking section (63) adjacent to the locking section along the axis and configured to permit the holding rod (7) to move heightwise; and an elastic member (65) configured to urge the operation rod (6) into the locking state and hold the operation rod (6) in the locking state.

## Description

### Technical Field

The present invention relates to a mower unit including a mower deck, blades each rotatably held in the mower deck, and wheel units each disposed on the outer face of a side wall of the mower deck.

### Background Art

A mower unit including blades and wheel units is capable of traveling on an uneven ground surface in a mowing field while preventing its blades from coming into contact with the ground as the wheel units are on the ground. Patent Literature 1 discloses a mower deck including a wheel adjustment mechanism that includes a holding rod with two or more horizontal grooves, a gauge wheel coupled to the lower end of the holding rod as a wheel unit, and a horizontal latch rod with a circumferential surface section engageable with the horizontal grooves and a surface depression not engageable with the horizontal grooves. The circumferential surface section and the surface depression face each other across the axis of the horizontal latch rod. Rotating the horizontal latch rod about its axis engages the circumferential surface section with a horizontal groove to hold the gauge wheel at a predetermined height.

### Citation List

### Patent Literature

Patent Literature 1: U.S. Patent No. No. 10609863

### Summary of Invention

### Technical Problem

The mower deck disclosed in Patent Literature 1 allows the user to rotate the horizontal latch rod (which functions as an operation rod for heightwise adjustment) about its horizontal axis to disengage the holding rod and adjust the height of the holding rod from the ground. As the mower unit is suspended near the ground surface, the user is unable to rotate the horizontally oriented horizontal latch rod without an awkward operation.

In view of the above circumstances, the present invention provides a mower unit including wheel units adjustable in height without awkwardness.

### Solution to Problem

A mower unit according to the present invention includes: a mower deck including: a top plate; and a side wall extending downward from an edge of the top plate; a blade rotatably held in the mower deck; and at least one wheel unit on an outer face of the side wall, the at least one wheel unit including: a wheel body; and a wheel holding mechanism configured to move the wheel body heightwise relative to the mower deck and hold the wheel body, the wheel holding mechanism including: a holding rod coupled to the wheel body; a boss bracket including a boss section through which the holding rod extends in such a manner as to be movable heightwise; an operation rod having an axis, slidable along the axis, and including: a locking section configured to achieve a locking state, in which the operation rod locks the holding rod at any of a plurality of positions; and an unlocking section adjacent to the locking section along the axis and configured to achieve an unlocking state, in which the operation rod permits the holding rod to move heightwise; and an elastic member configured to urge the operation rod into the locking state and hold the operation rod in the locking state.

The above configuration allows the user to simply press and slide the operation rod along its axis to selectively achieve the locking state and the unlocking state. Pressing the operation rod is easier than, for example, rotating the operation rod. The above configuration allows the user to adjust the wheel unit heightwise without awkwardness even when crouching. The elastic member urges the operation rod into the locking state and holds the operation rod in the locking state. This reduces the risk of the operation rod being unlocked inadvertently.

The mower unit may preferably be further configured such that the operation rod and the holding rod each have a circular or polygonal cross section. This, for example, facilitates production of the operation rod and the holding rod. The operation rod and the holding rod each do not necessarily have an identical cross section along its length, and may each have a circular or polygonal cross section partially along its length. The operation rod should preferably be a cylindrical rod for, in particular, a smooth axial slide and facilitated mechanical production. The locking section and the unlocking section, which are adjacent to each other along the axis, should conveniently have mutually different diameters in terms of mechanical production. The locking section of the operation rod should have an outer surface complementary in shape to the outer surface of each curved depression in the holding rod, to which curved depression the locking section is locked. This will allow efficient locking engagement, that is, a large engagement area. The mower unit may thus be further configured such that the operation rod is a cylindrical rod, the locking section is a large-diameter section, the unlocking section is a small-diameter section with a diameter smaller than a diameter of the large-diameter section, the holding rod is a cylindrical rod with a circumferential surface having a plurality of curved depressions along the axis, and the large-diameter section is configured to enter any of the plurality of curved depressions to achieve the locking state.

The locking section allows the cylindrical operation rod to achieve the locking state. The locking section should conveniently be shaped through a simple machining operation such as drilling. The mower unit may thus be further configured such that the plurality of curved depressions are each an area resulting from removal of a circumferential surface portion of the holding rod with use of a cylinder extending perpendicularly to the axis of the holding rod.

The operation rod will be operable more easily if simply pressing the operation rod allows the operation rod to transition from the locking state to the unlocking state, and stopping the press lets the operation rod automatically transition from the unlocking state to the locking state. The mower unit may thus be further configured such that the operation rod in the locking state is slidable against an urging force of the elastic member for the small-diameter section to face the circumferential surface to achieve the unlocking state, and the operation rod is configured to return to the locking state in response to a stop of a slide of the operation rod.

A large operation surface for the operation rod will allow the user to press the operation rod easily. The mower unit may thus be further configured such that the operation rod includes at a first end thereof an operation head with a diameter larger than the diameter of the large-diameter section, and the mower unit further includes a retaining pin attachable to a second end of the operation rod. With this configuration, the operation rod includes an operation head with a large diameter at one end and is provided with a retaining pin at the other end. This also prevents the operation rod from being detached.

The wheel body typically rolls on rough terrain and may be damaged. To facilitate replacement of a damaged wheel body, the wheel unit should preferably be structured for not the wheel holding mechanism but the wheel body alone to be removable from the mower deck. Further, the mower unit includes two or more wheel units on the mower deck. Using wheel bodies of an identical design for the wheel units allows the user to keep fewer spare wheel bodies for replacement. The mower unit may thus be further configured such that the at least one wheel unit includes a plurality of wheel units including respective wheel bodies of an identical design, respective coupling shafts coaxial with the respective wheel bodies, and respective wheel holding mechanisms, and the wheel bodies are detachably attached to the respective wheel holding mechanisms with use of the respective coupling shafts. In the case where the mower unit includes two or more wheel units on the mower deck, the mower unit may preferably be further configured such that the at least one wheel unit includes a plurality of wheel units, respective coupling shafts with respective axes that coincide with respective rotation axes of the wheel bodies, and respective wheel holding mechanisms, the wheel bodies are integrally coupled to the respective wheel holding mechanisms with use of the respective coupling shafts to provide the plurality of wheel units, the mower unit further includes a plurality of stays fixed to the mower deck, and the wheel units are detachably coupled to the respective stays and are each replaceable with another wheel unit. With this configuration, integrally coupling the wheel bodies, the coupling shafts, and the wheel holding mechanisms to one another provides wheel units each replaceable with another wheel unit. The wheel units on the left may include respective wheel bodies each configured to be attached to a wheel holding mechanism in an orientation different from that in which the respective wheel bodies of the wheel units on the right are configured to be attached to a wheel holding mechanism. In this case, the wheel units on the left are replaceable with each other, whereas the wheel units on the right are replaceable with each other.

### Brief Description of Drawings

Fig. 1 is a perspective view of a mower unit in its entirety.
Fig. 2 is a right side view of a mower unit.
Fig. 3 is a perspective view of a wheel unit.
Fig. 4 is a partially cross-sectional plan view of a wheel unit.
Fig. 5 is a vertical cross-sectional front view of a wheel unit with its operation rod and holding rod in a disengaged state.
Fig. 6 is a side view of an operation rod.
Fig. 7 is a front view of a wheel unit with its operation rod and holding rod in an engaged state.
Fig. 8 is a perspective view of a boss bracket.
Fig. 9 is a side view of a holding rod and a wheel body.

### Description of Embodiments

Unless otherwise stated, the present specification uses (i) terms such as "forward" to refer to the front direction along the front-rear axis (travel directions) of a vehicle, (ii) terms such as "rearward" to refer to the rearward direction along the front-rear axis of the vehicle, (iii) terms such as "left-right axis" and "lateral axis" to refer to the transverse axis (width) of the vehicle, which is orthogonal to the front-rear axis of the vehicle, and (iv) terms such as "upward" and "downward" to refer to directions along the vertical axis (height from the ground) of the vehicle.

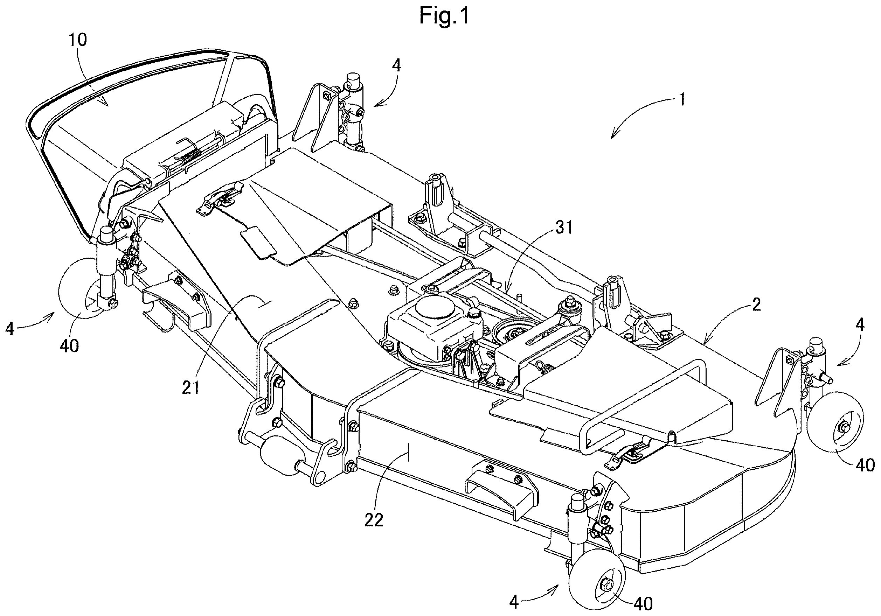

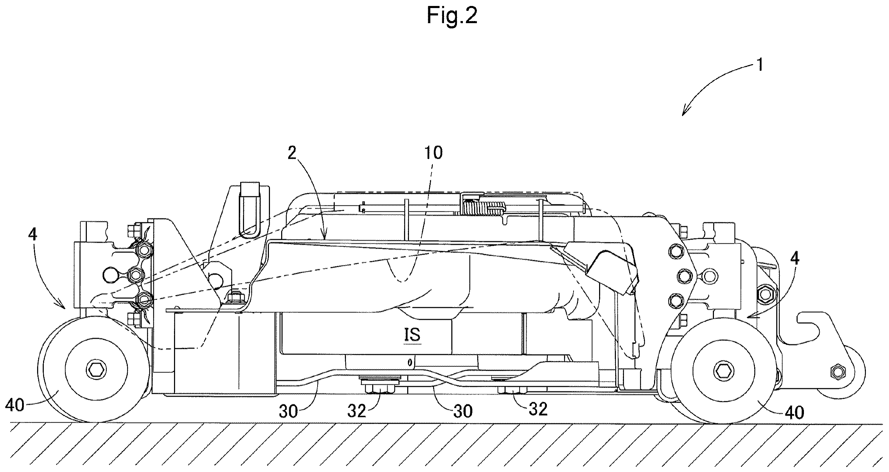

The description below deals with a mower unit as a specific embodiment of the present invention with reference to drawings. Fig. 1 is a perspective view of a mower unit 1 in its entirety. Fig. 2 is a right side view of the mower unit 1. The mower unit 1 is attachable to the body of a tractor or mower with use of a link mechanism or the like. The mower unit 1 is capable of being lowered to a lower position, in which the mower unit 1 is in contact with the ground surface, and lifted to an upper position, in which the mower unit 1 is separated from the ground surface by a predetermined distance. As attached to the body, the mower unit 1 has a front-rear axis that coincides with the front-rear axis (travel directions) of the body, a lateral axis (left-right axis) that coincides with the transverse axis of the body (which is orthogonal to the front-rear axis), and a vertical axis (height) that coincides with the vertical axis (height from the ground) of the body.

The mower unit 1 includes a mower deck 2 including a top plate 21 larger widthwise than lengthwise and side walls 22 extending downward from the edge of the top plate 21. As illustrated in Fig. 2, while the mower deck 2 has an internal space IS, the mower unit 1 includes three blades 30 arranged laterally in the internal space IS. The mower unit 1 includes three blade shafts 32 extending vertically and rotatably held by the mower deck 2. The blades 30 are each fixed to the lower end of one of the blade shafts 32. As illustrated in Fig. 1, the mower unit 1 includes a blade drive mechanism 31 provided for the top plate 21 and including a belt to rotate the blade shafts 32. The blade drive mechanism 31 receives motive power from the vehicle to which the mower unit 1 is attached (not illustrated in the drawings). The mower deck 2 has at the right end a cut grass discharge opening 10 at which the internal space IS is open. The blades 30 rotate to cut grass and generate a conveyance wind that discharges the cut grass through the cut grass discharge opening 10.

The mower unit 1 includes four wheel units 4 each disposed on the outer face of one of the side walls 22, namely, two wheel units 4 at the respective left and right ends of a front side wall 22 (or front wall) and two wheel units 4 at the respective left and right ends of a rear side wall 22 (or rear wall).

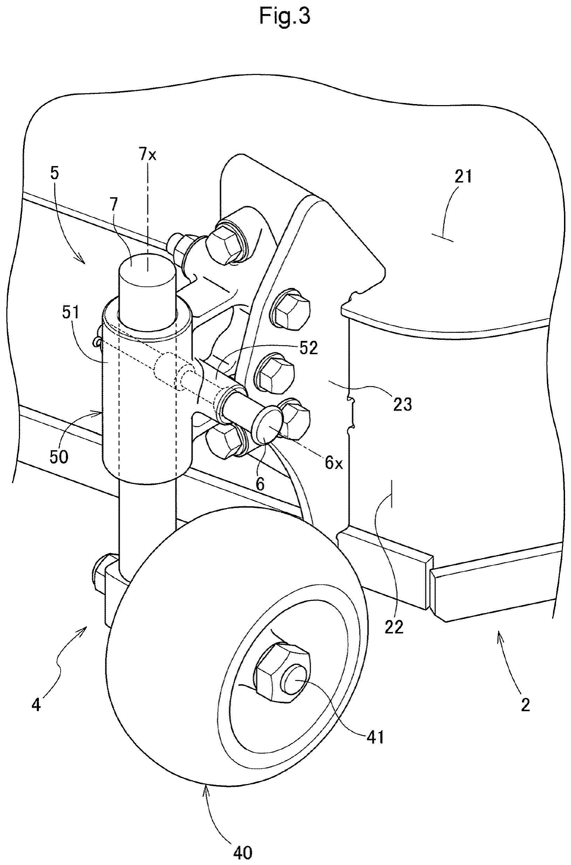

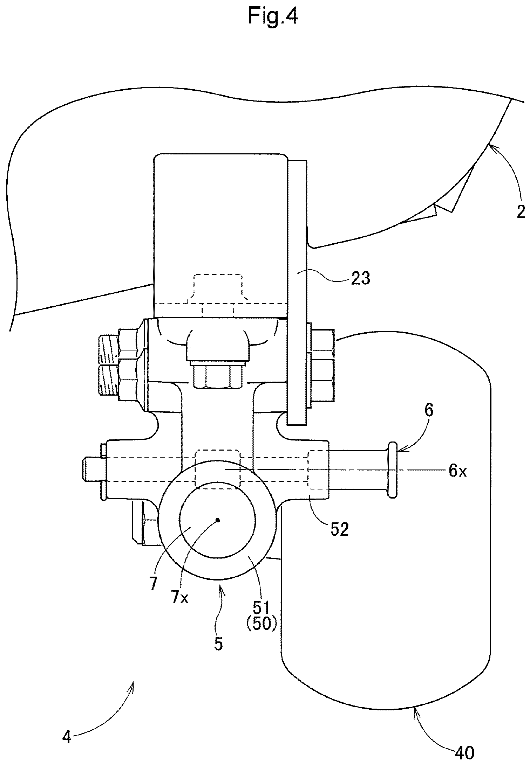

As illustrated in Figs. 3 to 7, the wheel units 4 each include a wheel body 40 and a wheel holding mechanism 5 holding the wheel body 40 in such a manner that the wheel body 40 is rotatable and movable heightwise relative to the mower deck 2. The mower unit 1 includes stays 23 with use of which the respective wheel units 4 are held by the top plate 21 and the corresponding side wall 22. Moving each wheel body 40 heightwise relative to the mower deck 2 moves the mower deck 2 heightwise relative to the ground.

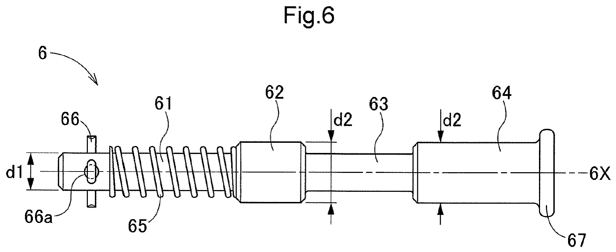

The wheel holding mechanism 5 includes a holding rod 7, a boss bracket 50, and an operation rod 6. The holding rod 7 has a lower end coupled to the corresponding wheel body 40. The boss bracket 50 includes a boss section 51 through which the holding rod 7 extends in such a manner as to be movable heightwise. As illustrated in Fig. 6, the operation rod 6 is a cylinder having an axis 6x and including a first section 61, a second section 62, a third section 63, and a fourth section 64 arranged in this order along the axis 6x.
The first and third sections 61 and 63 are small-diameter sections with an equal, small diameter (see d1 in Fig. 6), whereas the second and fourth sections 62 and 64 are large-diameter sections with an equal, large diameter (see d2 in Fig. 6). In other words, the first and third sections 61 and 63 differ in diameter from the second and fourth sections 62 and 64 by d2 - d1.

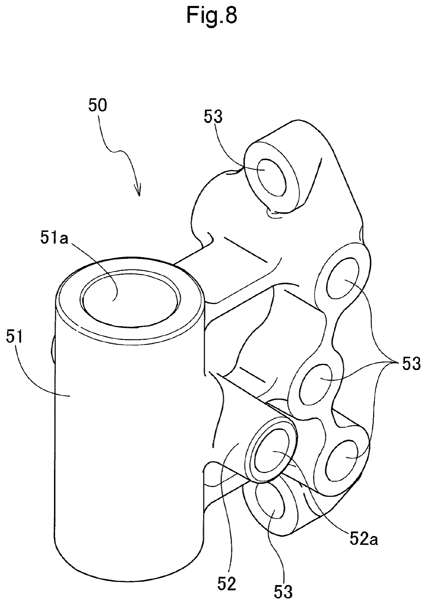

As illustrated in Fig. 8, the boss bracket 50 includes a boss section 51 for receiving the holding rod 7 and a rod guiding boss 52 integral with the boss section 51 for guiding the operation rod 6 as the operation rod 6 slides. The boss section 51 has a boss hole 51a for guiding the holding rod 7 as the holding rod 7 slides vertically. The rod guiding boss 52 has a guide hole 52a for guiding the operation rod 6 as the operation rod 6 slides axially. The boss bracket 50 also has two or more coupling holes 53 to be bolted to the corresponding stay 23.

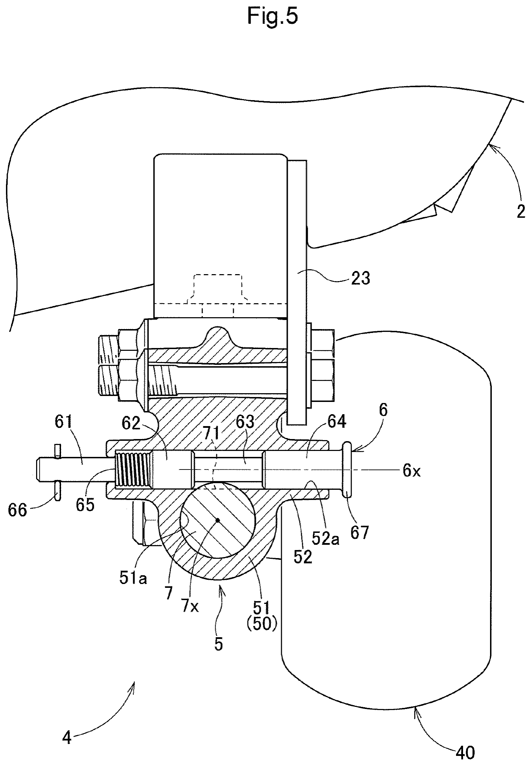

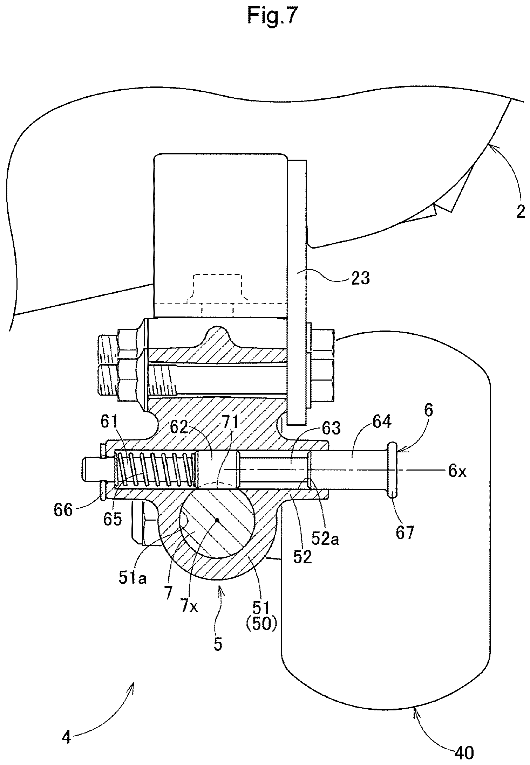

As illustrated in Figs. 5 and 7, the operation rod 6 extends through the guide hole 52a in such a manner as to be axially slidable. The holding rod 7 extends through the boss hole 51a. The operation rod 6 has an axis 6x that coincides with the axis of the guide hole 52a, whereas the holding rod 7 has an axis 7x that coincides with the axis of the boss hole 51a and that is orthogonal to the axis 6x. The operation rod 6 and the holding rod 7 are so positioned relative to each other that the large-diameter sections of the operation rod 6 come into contact with the holding rod 7.

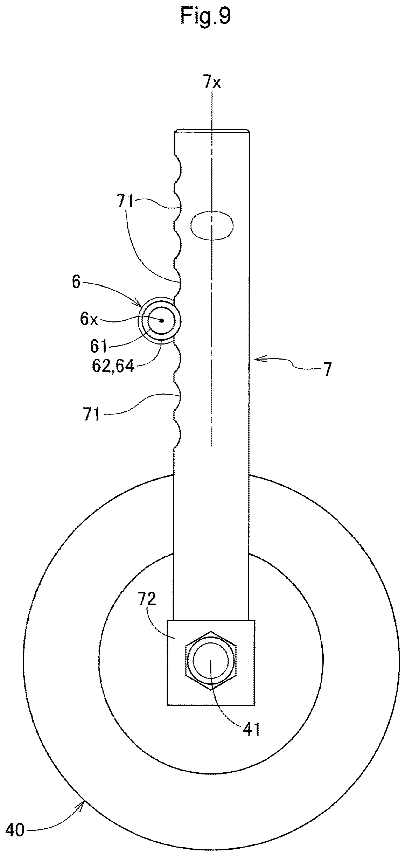

As illustrated in Fig. 9, the holding rod 7 is in the form of a cylinder with two or more curved depressions 71 arranged axially on its circumferential surface. The curved depressions 71 are each shaped to be an area resulting from removal of a circumferential surface portion of the holding rod 7 with use of a side of a cylinder extending perpendicularly to the axis of the holding rod 7. Specifically, the curved depressions 71 each result from machining the surface of the holding rod 7 with use of a drill oriented to cross the axis 7x and positioned at a predetermined depth from the circumferential surface of the holding rod 7. The drill has a diameter equivalent to the diameter of the large-diameter sections of the operation rod 6 (namely, the second and fourth sections 62 and 64). The predetermined depth allows the operation rod 6 and the holding rod 7 to be positioned relative to each other such that the holding rod 7 comes into contact with the large-diameter sections to be prevented from moving heightwise and does not come into contact with the small-diameter sections (namely, the first and third sections 61 and 63). The curved depressions 71 are each complementary in shape to the large-diameter sections.

The large-diameter and small-diameter sections of the operation rod 6 are positionable relative to the curved depressions 71 into a locking state to lock the holding rod 7 at a predetermined position (see Fig. 7) or an unlocking state to permit the holding rod 7 to move heightwise (see Fig. 5). One of the large-diameter sections serves as a locking section for the locking state, whereas one of the small-diameter sections serves as an unlocking section for the unlocking state. The present embodiment includes a locking section (that is, the second section 62) adjacent to an unlocking section (that is, the third section 63). The locking section may alternatively be apart from the unlocking section.

As illustrated in Figs. 5 to 7, the operation rod 6 includes a coil spring 65 as an elastic member around the first section 61 as a small-diameter section and a retaining pin 66 insertable in a pin hole 66a in the leading end of the first section 61. The user inserts the operation rod 6 into the guide hole 52a together with the coil spring 65 and then inserts the retaining pin 66 into the pin hole 66a so that the rod guiding boss 52 holds the operation rod 6.

The operation rod 6, as held by the rod guiding boss 52, is stopped by the urging force of the coil spring 65 at a stopper position of the retaining pin 66. At the stopper position, the second section 62 as a large-diameter section faces and enters one of the curved depressions 71 on the circumferential surface of the holding rod 7. This achieves a locking state, in which the operation rod 6 is locking the holding rod 7 (see Fig. 7). The fourth section 64 includes an operation head 67 disposed at the leading end and having a diameter larger than the large-diameter sections. In the above locking state, sliding the operation head 67 against the urging force of the coil spring 65 results in the third section 63 as a small-diameter section facing one of the curved depressions 71 but not coming into contact with the circumferential surface of the holding rod 7. This achieves an unlocking state, in which the operation rod 6 is not in contact with the holding rod 7 (see Fig. 5). This allows the holding rod 7 to be moved heightwise and thereby allows the heightwise position of the wheel body 40 to be adjusted freely. When the wheel body 40 reaches a desired heightwise position, the user stops sliding the operation rod 6 to let the operation rod 6 slide due to the urging force of the coil spring 65 and the second section 62 enter a desired one of the curved depressions 71 for the operation rod 6 to return to the locking state.

As illustrated in Fig. 9, the holding rod 7 includes a coupler 72 at its lower end. Each wheel unit 4 includes a coupling shaft 41 with a rotation axis that coincides with the axis of the wheel body 40. The coupling shaft 41 extends through the corresponding coupler 72 and holds the wheel body 40. The coupler 72 is detachably bolted to the free end of the coupling shaft 41.

As illustrated in Figs. 3 and 9, the mower unit 1 includes four wheel units 4 disposed on the mower deck 2 and including respective wheel bodies 40 of an identical design and respective wheel holding mechanisms 5 each attachable to and attachable from the corresponding stay 23 easily with use of bolts. This facilitates inspection and maintenance of the wheel units 4.

Figs. 3 and 8 clearly show that the boss brackets 50 are each vertically symmetrical in structure and that all the operation rods 6 (four for the present embodiment), each of which serves to adjust the height of the corresponding wheel body 40, are configured to be pressed inward of the mower deck 2 for attachment and operated. With reference to Fig. 1, the user presses two operation rods 6 for the left wheel units 4 in a direction inward of the mower deck 2 from the left for attachment and two operation rods 6 for the right wheel units 4 in a direction inward of the mower deck 2 from the right for attachment so that the operation rods 6 are operable. The above configuration facilitates attachment and operation of the operation rods 6.

### Alternative Embodiments

(1) The mower unit 1 as the embodiment described above includes four wheel units 4 in total on the mower deck 2, namely one at a forward and left portion, one at a forward and right portion, one at a rearward and left portion, and one at a rearward and right portion. The wheel units 4 are, however, not necessarily arranged as such. The mower unit 1 may include more or fewer than four wheel units 4.
(2) The embodiment described above includes coil springs 65 each around the first section 61 of the corresponding operation rod 6 as an elastic member for urging the operation rod 6 into the locking state and holding the operation rod 6 in the locking state. The elastic member may alternatively be a plate spring or another elastic structure, and may alternatively be around another section of the operation rod 6 or away from the operation rod 6.
(3) The embodiment described above is configured such that inserting the second section 62 of each operation rod 6 into a curved depression 71 achieves the locking state of the operation rod 6. The locking state may alternatively be based on another geometric shape such as an angular surface or a prism. The operation rods 6 and the holding rods 7 for the embodiment described above are each in the form of a cylindrical rod. The operation rods 6 and the holding rods 7 may alternatively be each in the form of a rod with a circular or polygonal cross section.

The arrangements disclosed for the above embodiments (including the alternative embodiments; hereinafter the same applies) may each be combined with an arrangement disclosed for another embodiment, as long as such a combination does not cause a contradiction. Further, the embodiments disclosed in the present specification are mere examples. The present invention is not limited to those embodiments, and may be altered as appropriate, as long as such an alteration does not result in a failure to attain an object of the present invention.

### Industrial Applicability

The present invention is applicable to any mower unit including wheel units.

### Reference Signs List

- 1: Mower unit
- 2: Mower deck
- 4: Wheel unit
- 5: Wheel holding mechanism
- 6: Operation rod
- 7: Holding rod
- 10: Cut grass discharge opening
- 21: Top plate
- 22: Side wall
- 23: Stay
- 30: Blade
- 40: Wheel body
- 41: Coupling shaft
- 50: Boss bracket
- 51: Boss section
- 51a: Boss hole
- 52a: Guide hole
- 53: Coupling hole
- 61: First section
- 62: Second section (locking section)
- 63: Third section (unlocking section)
- 64: Fourth section
- 65: Coil spring (elastic member)
- 66: Retaining pin
- 66a: Pin hole
- 67: Operation head
- 71: Curved depression
- 72: Coupler
- IS: Internal space

## Claims

1. A mower unit (1), comprising:
a mower deck (2) including:
a top plate (21); and
a side wall (22) extending downward from an edge of the top plate (21);
a blade (30) rotatably held in the mower deck (2); and
at least one wheel unit (4) on an outer face of the side wall (22),
the at least one wheel unit (4) including:
a wheel body (40); and
a wheel holding mechanism (5) configured to move the wheel body (40) heightwise relative to the mower deck (2) and hold the wheel body (40),
the wheel holding mechanism (5) including:
a holding rod (7) coupled to the wheel body (40);
a boss bracket (50) including a boss section (51) through which the holding rod (7) extends in such a manner as to be movable heightwise;
an operation rod (6) having an axis, slidable along the axis, and including:
a locking section (62) configured to achieve a locking state, in which the operation rod (6) locks the holding rod (7) at any of a plurality of positions; and
an unlocking section (63) adjacent to the locking section (62) along the axis and configured to achieve an unlocking state, in which the operation rod (6) permits the holding rod (7) to move heightwise; and
an elastic member (65) configured to urge the operation rod (6) into the locking state and hold the operation rod (6) in the locking state.

2. The mower unit (1) according to claim 1, wherein
the operation rod (6) and the holding rod (7) each have a circular or polygonal cross section.

3. The mower unit (1) according to claim 2, wherein
the operation rod (6) is a cylindrical rod,
the locking section (62) is a large-diameter section,
the unlocking section (63) is a small-diameter section with a diameter smaller than a diameter of the large-diameter section,
the holding rod (7) is a cylindrical rod with a circumferential surface having a plurality of curved depressions (71) along the axis, and
the large-diameter section is configured to enter any of the plurality of curved depressions (71) to achieve the locking state.

4. The mower unit (1) according to claim 3, wherein
the plurality of curved depressions (71) are each an area resulting from removal of a circumferential surface portion of the holding rod (7) with use of a cylinder extending perpendicularly to the axis of the holding rod (7).

5. The mower unit (1) according to claim 3 or 4, wherein
the operation rod (6) in the locking state is slidable against an urging force of the elastic member (65) for the small-diameter section to face the circumferential surface to achieve the unlocking state, and
the operation rod (6) is configured to return to the locking state in response to a stop of a slide of the operation rod (6).

6. The mower unit (1) according to any one of claims 3 to 5, wherein
the operation rod (6) includes at a first end thereof an operation head (67) with a diameter larger than the diameter of the large-diameter section, and
the mower unit (1) further comprises a retaining pin (66) attachable to a second end of the operation rod (6).

7. The mower unit (1) according to any one of claims 1 to 6, wherein
the at least one wheel unit (4) includes a plurality of wheel units (4) including respective wheel bodies (40) of an identical design, respective coupling shafts (41) coaxial with the respective wheel bodies (40), and respective wheel holding mechanisms (5), and
the wheel bodies (40) are detachably attached to the respective wheel holding mechanisms (5) with use of the respective coupling shafts (41).

8. The mower unit (1) according to any one of claims 1 to 7, wherein
the at least one wheel unit (4) includes a plurality of wheel units (4), respective coupling shafts (41) with respective axes that coincide with respective rotation axes of the wheel bodies (40), and respective wheel holding mechanisms (5),
the wheel bodies (40) are integrally coupled to the respective wheel holding mechanisms (5) with use of the respective coupling shafts (41) to provide the plurality of wheel units (4),
the mower unit (1) further comprises a plurality of stays (23) fixed to the mower deck (2), and
the wheel units (4) are detachably coupled to the respective stays (23) and are each replaceable with another wheel unit (4).
